# EUROPEAN PATENT APPLICATION

(11) **EP 4 675 547 A1**
(43) Date of publication of application: **07.01.2026**
(21) Application number: 25185680.3
(22) Date of filing: 26.06.2025
(51) Int. Cl.: G06T 3/4038

(54) **METHOD AND SYSTEM FOR VERTICAL IMAGE STITCHING**

(30) Priority: 01.07.2024 US 202418760390
(71) Applicant: Stoneridge Electronics AB, 16903 Solna (SE)
(72) Inventor: WANG, Song, Novi, 48377 (US); SHARMA, Utkarsh, Farmington Hills, 48334 (US); MA, Liang, Rochester, 48306 (US); COOPRIDER, Troy, White Lake, 48386 (US)
(74) Representative: Marks & Clerk LLP

(57) **Abstract**

A method for a camera monitor system (CMS) includes obtaining a first image from a first camera and a second image from a second camera. The first image and second image depict a side of a commercial vehicle and its surrounding environment. The first camera and the second camera have different, overlapping fields of view, and have different respective optical axes that intersect a ground plane at different respective optical angles. The method also includes performing a perspective transformation on at least one of the first image and second image to obtain an updated image set, such that at least one of the first image and second image are updated in the updated image set, and vertically stitching the images of the updated image set together to form a combined image. A camera monitor system (CMS) is also disclosed.

## Description

### TECHNICAL FIELD

This disclosure relates to a camera monitor system (CMS), and more particularly to a method and system for providing vertical image stitching in a CMS.

### BACKGROUND

Vehicle camera systems for mirror replacement or for supplementing mirror views are utilized in commercial vehicles to enhance the ability of a vehicle operator to see a surrounding environment of the commercial vehicle. Camera monitor systems (CMS) utilize one or more cameras to provide an enhanced field of view to a vehicle operator. In some examples, the mirror replacement systems cover a larger field of view than a conventional mirror, or include views that are not fully obtainable via a conventional mirror. When images are provided to a vehicle occupant from multiple cameras, it may be difficult for the driver to efficiently analyze the images.

### SUMMARY

A method for a camera monitor system (CMS) according to an example embodiment of the present disclosure includes obtaining a first image from a first camera and a second image from a second camera. The first image and second image depict a side of a commercial vehicle and its surrounding environment. The first camera and the second camera have different, overlapping fields of view, and have different respective optical axes that intersect a ground plane at different respective optical angles. The method also includes performing a perspective transformation on at least one of the first image and second image to obtain an updated image set, such that at least one of the first image and second image are updated in the updated image set, and vertically stitching the images of the updated image set together to form a combined image.

In a further embodiment of the foregoing embodiment, the different respective optical angles include a first optical angle of the first camera and a second optical angle of the second camera. The first optical angle is less than 90°. The second optical angle is less than or equal to 90° and is greater than the first optical angle.

In a further embodiment of any of the foregoing embodiments, the first camera has a first focal length, and the second camera has a second focal length that is less than the first focal length. The second camera is located closer to a front of the commercial vehicle than the first camera.

In a further embodiment of any of the foregoing embodiments, the first image is depicted above the second image.

In a further embodiment of any of the foregoing embodiments, the performing a perspective transformation is performed for both the first image and the second image, such that both the first image and the second image are updated in the updated image set.

In a further embodiment of any of the foregoing embodiments, the method includes, prior to performing the perspective transformation, performing at least one of a distortion correction for the first image from the first camera to mitigate image distortion caused by a lens or sensor of the first camera, and a distortion correction for the second image from the second camera to mitigate image distortion caused by a lens or sensor of the second camera.

In a further embodiment of any of the foregoing embodiments, the method includes, prior to performing the perspective transformation, performing both of a distortion correction for the first image from the first camera to mitigate image distortion caused by a lens or sensor of the first camera, and a distortion correction for the second image from the second camera to mitigate image distortion caused by a lens or sensor of the second camera.

In a further embodiment of any of the foregoing embodiments, the method includes, prior to the vertically stitching, performing at least one of cropping and zooming at least one of the first image and the second image.

In a further embodiment of any of the foregoing embodiments, vertically stitching the images of the updated image set together to form a combined image includes mapping a plurality of points of the first image in the updated image set to the second image in the updated image set, aligning the first image in the updated image set and the second image in the updated image set based on the mapping, and blending the first image in the updated image set and the second image in the updated image set to form the combined image.

In a further embodiment of any of the foregoing embodiments, the method includes displaying the combined image on an electronic display in the commercial vehicle in a first mode, displaying at least one of the first image and the second image separately without combination in a second mode, and toggling between the first mode and the second mode in response to receiving a toggle command from an occupant of the commercial vehicle.

A camera monitor system (CMS) according to an example embodiment of the present disclosure includes a first camera and a second camera that are each configured to record respective images of a side of a commercial vehicle and its surrounding environment. The first camera and the second camera have different, overlapping fields of view, and have different respective optical axes that intersect a ground plane at different respective optical angles. The camera monitor system includes processing circuitry operatively connected to memory and configured to obtain a first image from the first camera and a second image from the second camera; perform a perspective transformation on at least one of the first image and second image to obtain an updated image set, such that at least one of the first image and second image are updated in the updated image set; and vertically stitch the images of the updated image set together to form a combined image.

In a further embodiment of the foregoing embodiment, the different respective optical angles include a first optical angle of the first camera and a second optical angle of the second camera. The first optical angle is less than 90°. The second optical angle is less than or equal to 90° and is greater than the first optical angle

In a further embodiment of any of the foregoing embodiments, the first camera has a first focal length, and the second camera has a second focal length that is less than the first focal length. The second camera is located closer to a front of the commercial vehicle than the first camera.

In a further embodiment of any of the foregoing embodiments, in the combined image, the first image is depicted below the second image.

In a further embodiment of any of the foregoing embodiments, the processing circuitry is configured to perform the perspective transformation for both the first image and the second image, such that both the first image and the second image are updated in the updated image set.

In a further embodiment of any of the foregoing embodiments, the processing circuitry is configured to, prior to performance of the perspective transformation, perform at least one of a distortion correction for the first image from the first camera to mitigate image distortion caused by a lens or sensor of the first camera, and a distortion correction for the second image from the second camera to mitigate image distortion caused by a lens or sensor of the second camera.

In a further embodiment of any of the foregoing embodiments, the processing circuitry is configured to, prior to performance of the perspective transformation, perform both of a distortion correction for the first image from the first camera to mitigate image distortion caused by a lens or sensor of the first camera, and a distortion correction for the second image from the second camera to mitigate image distortion caused by a lens or sensor of the second camera.

In a further embodiment of any of the foregoing embodiments, the processing circuitry is configured to, prior to the vertical stitching, perform at least one of a crop and a zoom of at least one of the first image and the second image.

In a further embodiment of any of the foregoing embodiments, to vertically stitch the images of the updated image set, the processing circuitry is configured to map a plurality of points of the first image in the updated image set to the second image in the updated image set, align the first image in the updated image set and the second image in the updated image set based on the mapping, and blend the first image in the updated image set and the second image in the updated image set to form the combined image.

In a further embodiment of any of the foregoing embodiments, the processing circuitry is configured to display the combined image on an electronic display in the commercial vehicle in a first mode, display at least one of the first image and the second image separately without combination in a second mode, and toggle between the first mode and the second mode in response to receipt of a toggle command from an occupant of the commercial vehicle.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

The disclosure can be further understood by reference to the following detailed description when considered in connection with the accompanying drawings wherein:
Figure 1 is a schematic front view of a commercial truck with a camera monitor system (CMS) used to provide at least Class II and Class IV views.
Figure 2 is a schematic birds-eye view of the commercial truck of Figure 1 with a CMS providing Class II, Class IV, Class V, and Class VI views.
Figure 3 is a schematic top view of an example vehicle cabin interior.
Figure 4 is a perspective view of the vehicle cabin interior of Figure 3.
Figure 5A is a schematic view of a side of the commercial vehicle and of an optical angle of a first CMS camera from Figure 1.
Figure 5B is a schematic view of a side of the commercial vehicle and of an optical angle of a second CMS camera from Figure 1.
Figure 6A is an example image from the CMS camera of Figure 5A.
Figure 6B is an example image from the CMS camera of Figure 5B.
Figure 7A is an example of the image of Figure 6A after distortion correction.
Figure 7B is an example of the image of Figure 6B after distortion correction.
Figure 8A is an example of the image of Figure 7A after perspective transformation.
Figure 8B is an example of the image of Figure 7B after perspective transformation.
Figure 9 is a vertically stitched combination of the images of Figures 8A and 8B.
Figure 10 is a flowchart of an example method for a CMS.

### DETAILED DESCRIPTION

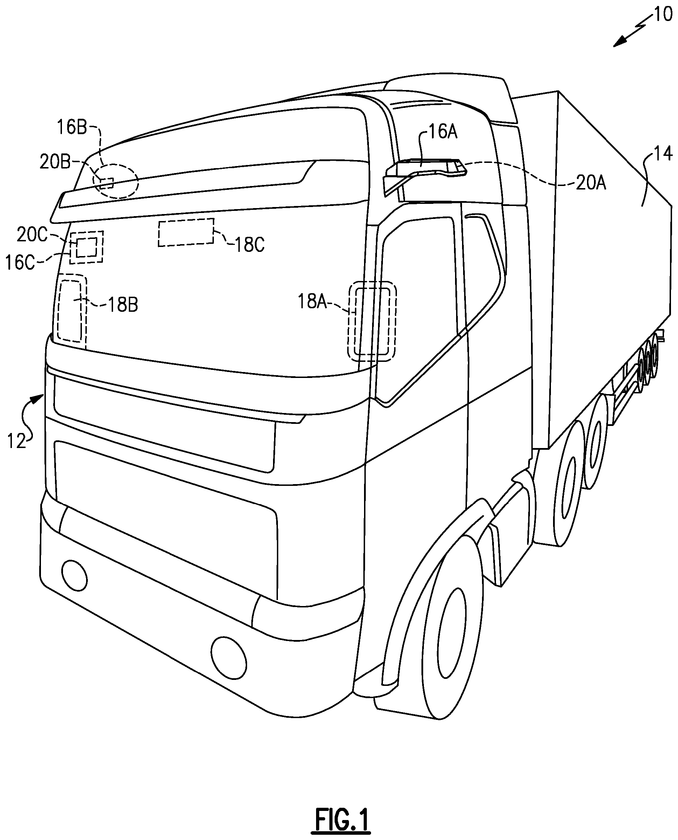

Schematic views of a commercial vehicle 10 are illustrated in Figures 1-4. The commercial vehicle 10 includes a vehicle cab or "tractor" 12 for pulling a trailer 14, where the trailer 14 pivots with respect to the tractor 12 during turns. Although the commercial vehicle 10 is depicted as a commercial truck with a single trailer in this disclosure, it is understood that other commercial vehicle configurations may be used (e.g., different types or quantities of trailers).

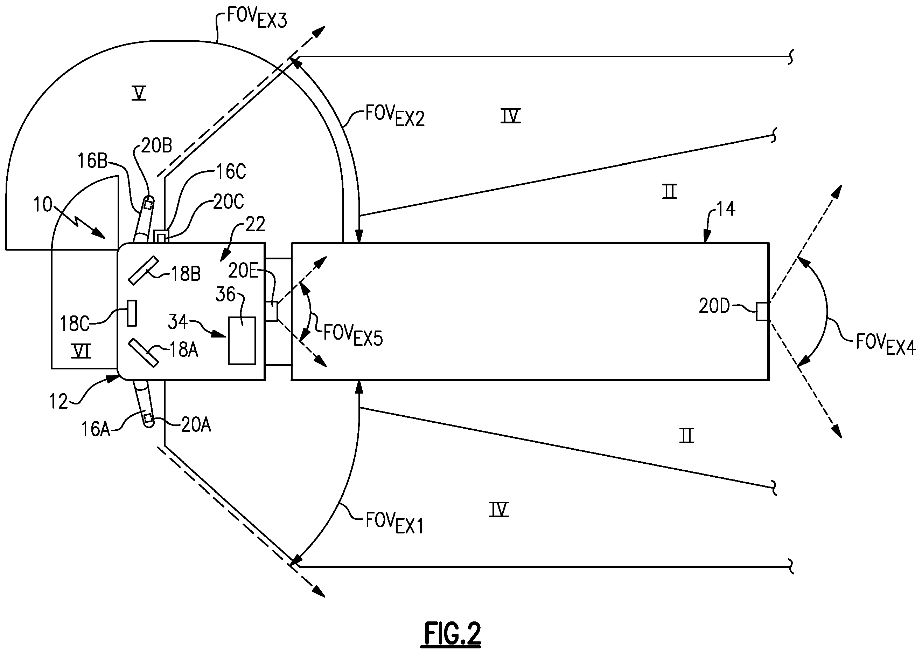

A pair of camera arms 16A-B include a respective base that is secured to, for example, the tractor 12. A pivoting arm is supported by the base and may articulate relative thereto. At least one rearward facing camera 20A-B is arranged respectively on or within the camera arms 16A-B. The exterior cameras 20A-B respectively provide an exterior field of view FOV_{EX1}, FOV_{EX2} that each include at least one of Class II and Class IV views (Fig. 2), which are legally prescribed views in the commercial trucking industry.

The Class II view on a given side of the commercial vehicle 10 is a subset of the class IV view of the same side of the commercial vehicle 10. Multiple cameras also may be used in each camera arm 16A-B to provide these views, if desired. Class II (narrow) and Class IV (wide angle) views are defined in European R46 legislation, for example, and the United States and other countries have similar drive visibility requirements for commercial trucks. Any reference to a "Class" view is not intended to be limiting, but is intended as an example of the type of view provided to a display from a particular camera.

Each camera arm 16A-16B may also provide a housing that encloses electronics, e.g., a controller, that are configured to provide various features of the CMS 15. The camera arms 16A-B may be mounted either at a roof-mount location over the cab door (as shown), or on a door-mounted bracket or station, for example.

A camera housing 16C and camera 20C are arranged near the front of the commercial vehicle 10 to provide an at least partial Class V view and possible also Class VI view (Figure 2). Alternatively, the camera 20C may be on or within the housing 16B. The camera 20C has a wide angle lens (focal length less than 35 mm), and possibly a "fisheye" lens (focal length on the order of 8-10 mm, for example), and has an associated field of view FOV_{EX3}.

A backup camera 20D may be provided which provides a field of view FOV_{EX4}. The backup camera 20D may be mounted at a top/centerline of the trailer, at a bumper/bed level of the trailer, or at a top-corner of the back of the trailer, for example. Alternatively, or in addition to the rear trailer camera, a "fifth wheel camera" 20E may be provided that is mounted to a rear of the tractor 12 and that provides a field of view FOV_{EX5}. The fifth wheel camera 20E may be mounted anywhere between the lateral plane of the fifth wheel fixture and the top/roof edge of the tractor, for example.

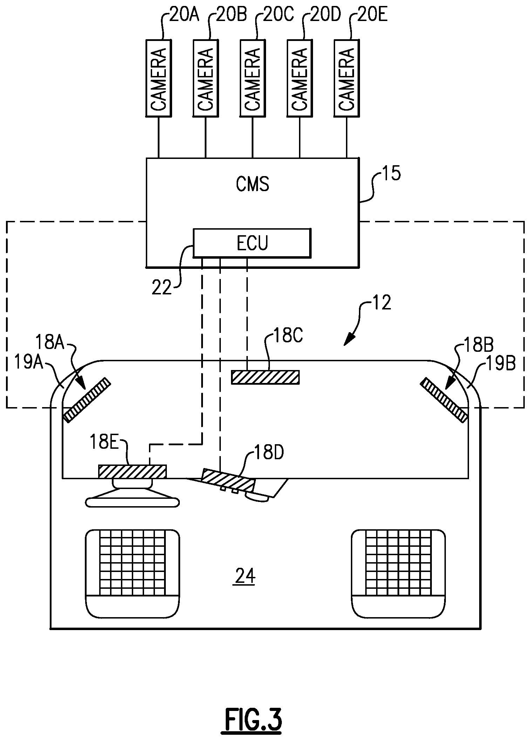

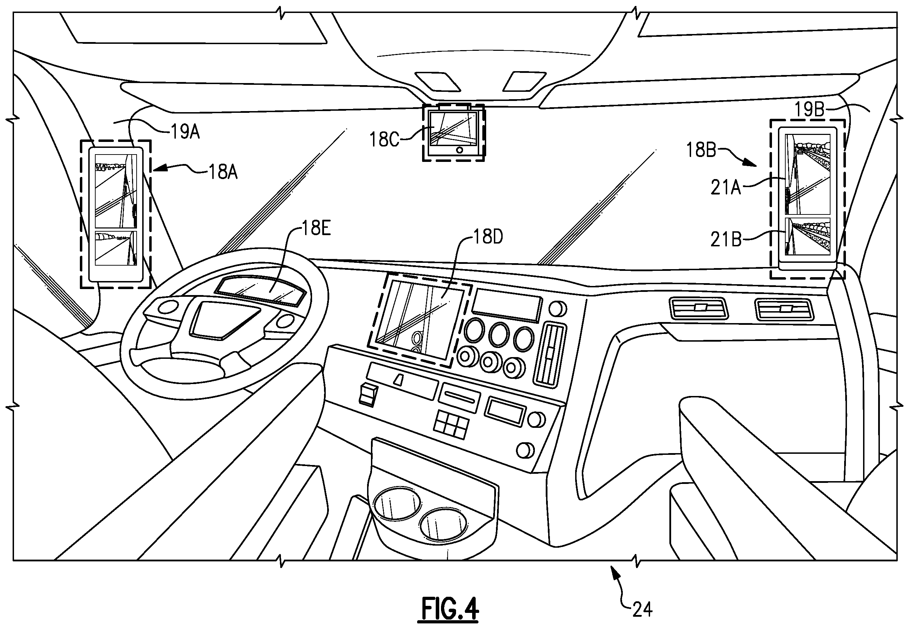

Figure 3 is a schematic top view of an example vehicle cabin interior 24, and Figure 4 is a perspective view of the vehicle cabin interior 24. Referring now to Figures 3-4 with continued reference to Figures 1-2, electronic displays 18A-E (e.g., which may be video displays, such as LCD displays) and cameras 20A-E are shown. The various electronic displays 18A-E and cameras 20A-E are part of a camera monitor system (CMS) 15, and therefore act as CMS displays and CMS cameras. As used herein, a "CMS camera" 20 is a camera configured to record images of an environment surrounding a commercial vehicle 10, and a "CMS display" 18 is an electronic display (e.g., an LCD) that is configured to image feeds from those cameras.

The CMS 15 includes a CMS electronic control unit (ECU) 22 that acts as a controller and includes processing circuitry that supports operation of the CMS 15. The CMS ECU 22 is operatively connected to memory (which may include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The processing circuitry may include one or more microprocessors, microcontrollers, application specific integrated circuits (ASICs), or the like.

The CMS displays 18A-B are arranged on each of the driver and passenger sides within the vehicle cab 12 on or near the A-pillars 19A-B to display Class II and Class IV views on its respective side of the commercial vehicle 10, which provide rear facing side views along the commercial vehicle 10 that are captured by the exterior cameras 20A-B. As shown in Figure 4, CMS display 18B has a first display area 21A used for depicting a Class II view, and a second display area 21B for depicting a Class IV view.

In the example of Figure 3, additional displays 18C-E are provided. Display 18C is arranged in the vehicle cabin interior 24 near the top center of the windshield and may be used to display the Class V and Class VI views, for example, which are toward the front of the commercial vehicle 10, or a backup camera view (from camera 20D or 20E) to the driver. Display 18D is provided in a center console area of the vehicle cabin interior 24, and may be used for other purposes, such as navigation, infotainment, etc. Display 18E may be part of an instrument cluster, for example.

If desired, the camera arms 16A-B may include conventional mirrors integrated with them as well, although the CMS 15 may be used to entirely replace mirrors. In additional examples, each side can include multiple camera arms, with each arm housing one or more cameras and/or mirrors.

As will be discussed in greater detail below, the CMS ECU 22 is configured to perform vertical image stitching to combine a view of CMS camera 20B ("first camera") and 20C ("second camera"). Vertical image stitching could similarly be provided for CMS camera 20A and an additional CMS camera disposed in a similar location to camera 20C but on the same side of the commercial vehicle 10 as camera 20A (i.e., the "driver side" of the commercial vehicle in the United States).

In the examples discussed below, CMS camera 20B has a first focal length and CMS camera 20C has a second focal length that is less than the first focal length, such that the camera 20C has a wider angle view than the camera 20B.

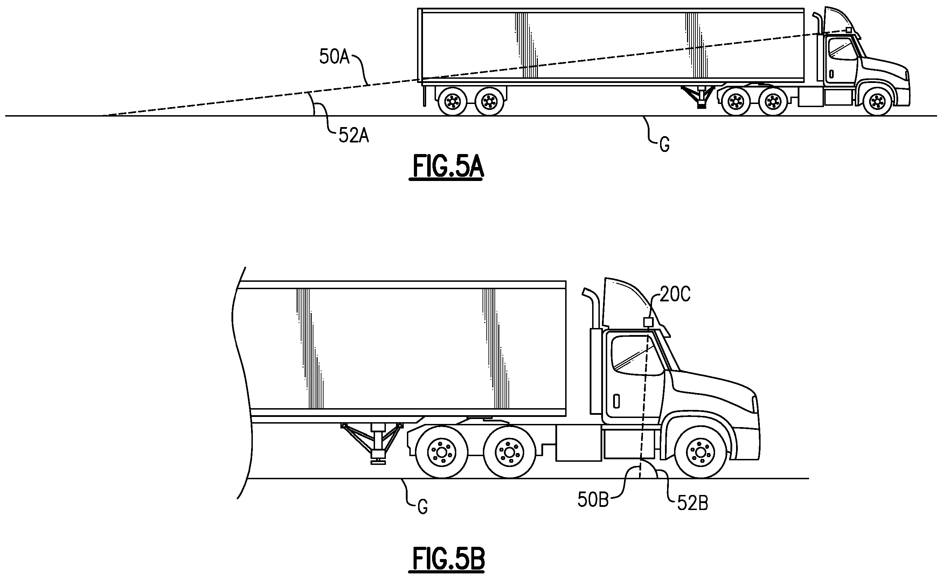

Figure 5A is a schematic view of a side of the commercial vehicle 10 and of an optical angle 52A of a CMS camera 20B ("first camera"). The optical angle 52A is formed between an intersection of optical axis 50A of camera 20B and a ground plane G. The optical angle 52A is less than 90°.

Figure 5B is a schematic view of a side of the commercial vehicle 10 and of an optical angle 52B CMS camera 20C ("second camera"). The optical angle 52B is formed between an intersection of optical axis 50B of camera 20C and the ground plane G. In the example of Figure 5B, the optical angle 52A is less than 90°, but in further examples it may be equal to 90°. The optical angle 52B of camera 20C is greater than the optical angle 52A of camera 20B.

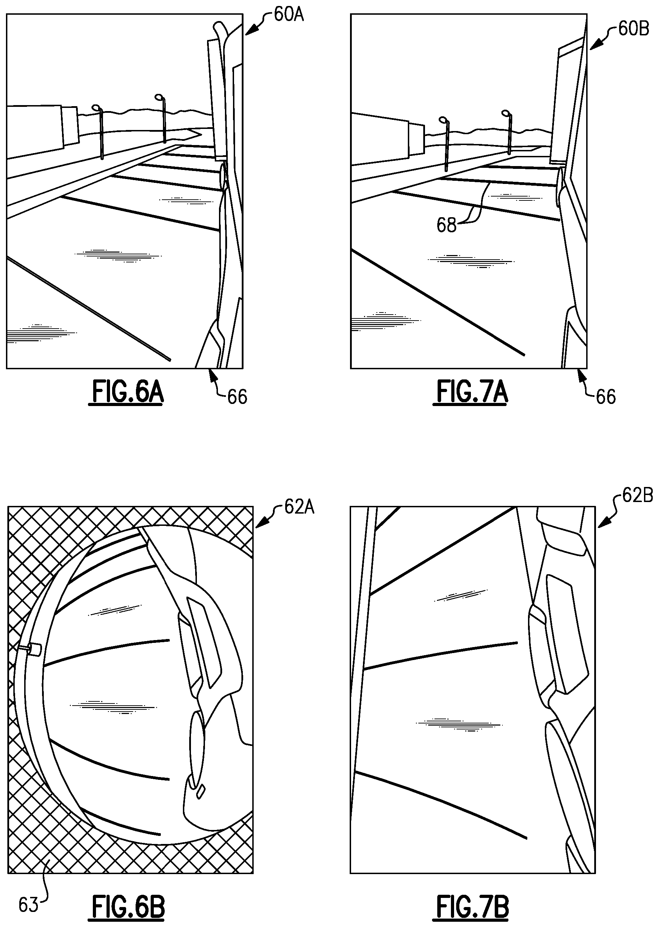

Figure 6A is an example image 60A from the CMS camera of Figure 5A, prior to distortion correction or perspective transformation.

Figure 6B is an example image 62A from the CMS camera of Figure 5B, which exhibits more lens distortion than the image 60A. This image also exhibits a considerable amount of lens distortion, resulting in image area 63 that lacks image data. In Figures 6B, 8B, and 9, areas that lack image data are shown in cross-hatching.

The CMS ECU 22 performs distortion correction for one or both of the images 60A, 62A. For the discussion below, assume that distortion correction is performed for both images 60A, 62A.

Figure 7A depicts the image 60A of Figure 6A after distortion correction, as image 60B. While a front portion 66 of the tractor 12 appears generally curved in image 60A, it is less curved in image 60B of Figure 7A.

Figure 7B depicts the image 62A after distortion correction, as image 62B. Here, the significant distortion of image 62A has been significantly reduced.

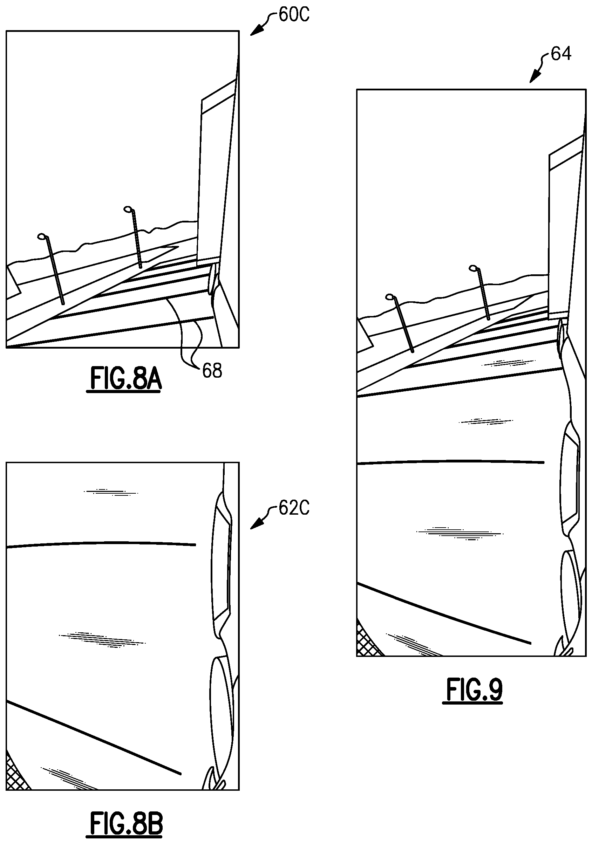

Figure 8A depicts the image 60B of Figure 7A after perspective transformation and at least one of cropping and zooming, as image 60C. As shown in the image 60C, the road lines 68, instead of being angled downward, are now angled upward due to the changed perspective of the image 60C.

Figure 8B is an example of the image 62B of Figure 7B after perspective transformation and at least one of cropping and zooming, as image 62C. Here too, the perspective of image 62B has been transformed in the creation of image 62C.

Figure 9 is a combined image 64 corresponding to images 60C and 62C vertically stitched together.

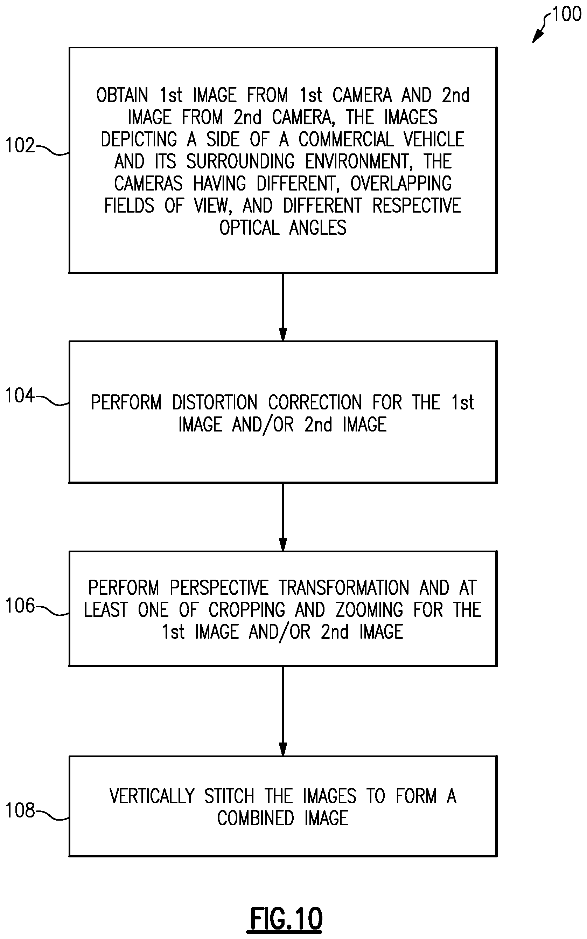

Figure 10 is a flowchart of an example method 100 for a CMS. The method 100 is performed by the CMS ECU 22. A first image 60A is obtained from first camera 20B and a second image 62A is obtained from a second camera 20C (step 102). The images 60A and 62A both depict a side of the commercial vehicle 10 and its surrounding environment. The first camera 20B and the second camera 20C have different, overlapping fields of view, and have different respective optical axes 50A, 50B that intersect ground plane G at different respective optical angles 52A, 52B (see, e.g., Figures 5A-B).

A distortion correction is performed (step 104) on at least one of the first image 60A and second image 62A to obtain a first updated image set. The distortion correction of the first image 60A, if performed, mitigates image distortion caused by a lens and/or sensor of the first camera 20B. The distortion correction of the second image 62A, if performed, mitigates image distortion caused by a lens and/or sensor of the second camera 20C. In the example of Figures 7A-B above, a distortion correction is performed on both of images 60A and 62A such that the updated image set includes images 60B and 62B. However, it is understood that this is a non-limiting example, and that it would be possible to omit distortion correction for one or both of the images 60A, 62A.

A perspective transformation and at least one of cropping and zooming is performed (step 106) on at least one of the distortion-corrected image 60B and the distortion-corrected image 62B to obtain a second updated image set that, such that at least one of the first image and second image are updated in the updated image set. In the example above, a perspective transformation is performed on both of the distortion-corrected images 60B and 62B, such that the second updated image set includes images 60C and 62C. In one or more embodiments, the OpenGL "imwarp" function is used to perform the perspective transformation.

The first image 60C and/or the second image 62C are then vertically stitched (step 108) to form combined image 64. In the combined image 64, the first image 60C is depicted above the second image 62C.

In one or more embodiments, the image stitching of step 108 includes mapping a plurality of first points of the first image 60C in the updated image set (e.g., along a bottom of the first image 60C) to a corresponding plurality of second points in the second image 62C in the updated image set (e.g., along a top of the second image 62C), aligning the first image 60C in the updated image set and the second image 62C in the updated image set based on the mapping (e.g., so that the points of image 60C overlap with the points of image 62C), and blending the first image 60C in the updated image set and the second image 62C in the updated image set to obtain the combined image.

The combined image 64 is displayed on an electronic display in the commercial vehicle 10, such as the display 18B. In one or more embodiments, the CMS 15 includes two modes. In the first mode, the combined image 64 is displayed on the display (e.g., display 18B, across one or both of the display areas 21A-B), and in a second mode at least one of the first image 60 and/or the second image 62 are displayed separately without combination (e.g., display image 60 in display area 21A of display 18B, and display image 62 on display 18C), and the CMS 15 toggles between the two modes in response to receiving a toggle command from an occupant of the commercial vehicle 10.

The combined image 64 provides the ability for providing a larger continuous, cohesive field of view to a vehicle occupant without incurring the expense or strong image distortion that would be associated with adding another camera to provide the field of view of the combined image 64.

Although example embodiments have been disclosed, a worker of ordinary skill in this art would recognize that certain modifications would come within the scope of the claims. For that reason, the following claims should be studied to determine their true scope and content.

## Claims

1. A method for a camera monitor system (CMS), comprising:
obtaining a first image from a first camera and a second image from a second camera, the first image and second image depicting a side of a commercial vehicle and its surrounding environment, the first camera and the second camera having different, overlapping fields of view, and having different respective optical axes that intersect a ground plane at different respective optical angles;
performing a perspective transformation on at least one of the first image and second image to obtain an updated image set, such that at least one of the first image and second image are updated in the updated image set; and
vertically stitching the images of the updated image set together to form a combined image.

2. The method of claim 1, wherein:
the different respective optical angles comprise a first optical angle of the first camera and a second optical angle of the second camera;
the first optical angle is less than 90°; and
the second optical angle is less than or equal to 90° and is greater than the first optical angle,
optionally wherein the first camera has a first focal length, and the second camera has a second focal length that is less than the first focal length.

3. The method of either preceding claim, wherein in the combined image, the first image is depicted above the second image,
optionally wherein said performing a perspective transformation is performed for both the first image and the second image, such that both the first image and the second image are updated in the updated image set.

4. The method of any preceding claim, comprising prior to said performing the perspective transformation, performing at least one of:
a distortion correction for the first image from the first camera to mitigate image distortion caused by a lens or sensor of the first camera; and
a distortion correction for the second image from the second camera to mitigate image distortion caused by a lens or sensor of the second camera.

5. The method of any preceding claim, comprising prior to said performing the perspective transformation, performing both of:
a distortion correction for the first image from the first camera to mitigate image distortion caused by a lens or sensor of the first camera; and
a distortion correction for the second image from the second camera to mitigate image distortion caused by a lens or sensor of the second camera.

6. The method of any preceding claim, comprising prior to said vertically stitching:
performing at least one of cropping and zooming at least one of the first image and the second image.

7. The method of any preceding claim, wherein said vertically stitching the images of the updated image set together to form a combined image comprises:
mapping a plurality of first points of the first image in the updated image set to a plurality of second points in the second image in the updated image set;
aligning the first image in the updated image set and the second image in the updated image set based on the mapping; and
blending the first image in the updated image set and the second image in the updated image set to form the combined image.

8. The method of any preceding claim, comprising:
displaying the combined image on an electronic display in the commercial vehicle in a first mode;
displaying at least one of the first image and the second image separately without combination in a second mode; and
toggling between the first mode and the second mode in response to receiving a toggle command from an occupant of the commercial vehicle.

9. A camera monitor system (CMS), comprising:
a first camera and a second camera that are each configured to record respective images of a side of a commercial vehicle and its surrounding environment, wherein the first camera and the second camera have different, overlapping fields of view, and have different respective optical axes that intersect a ground plane at different respective optical angles; and
processing circuitry operatively connected to memory and configured to:
obtain a first image from the first camera and a second image from the second camera;
perform a perspective transformation on at least one of the first image and second image to obtain an updated image set, such that at least one of the first image and second image are updated in the updated image set; and
vertically stitch the images of the updated image set together to form a combined image.

10. The CMS of claim 9, wherein:
the different respective optical angles comprise a first optical angle of the first camera and a second optical angle of the second camera;
the first optical angle is less than 90°; and
the second optical angle is less than or equal to 90° and is greater than the first optical angle,
optionally wherein the first camera has a first focal length, and the second camera has a second focal length that is less than the first focal length.

11. The CMS of either of claims 9 or 10, wherein in the combined image, the first image is depicted below the second image,
optionally wherein the processing circuitry is configured to perform the perspective transformation for both the first image and the second image, such that both the first image and the second image are updated in the updated image set.

12. The CMS of any one of claims 9 to 11, wherein the processing circuitry is configured to, prior to performance of the perspective transformation, perform at least one of:
a distortion correction for the first image from the first camera to mitigate image distortion caused by a lens or sensor of the first camera; and
a distortion correction for the second image from the second camera to mitigate image distortion caused by a lens or sensor of the second camera,
optionally wherein the processing circuitry is configured to, prior to performance of the perspective transformation, perform both of:
a distortion correction for the first image from the first camera to mitigate image distortion caused by a lens or sensor of the first camera; and
a distortion correction for the second image from the second camera to mitigate image distortion caused by a lens or sensor of the second camera.

13. The CMS of any one of claims 9 to 12, wherein the processing circuitry is configured to, prior to the vertical stitching:
perform at least one of a crop and a zoom of at least one of the first image and the second image.

14. The CMS of any one of claims 9 to 13, wherein to vertically stitch the images of the updated image set, the processing circuitry is configured to:
map a plurality of first points of the first image in the updated image set to a plurality of second points in the second image in the updated image set;
align the first image in the updated image set and the second image in the updated image set based on the mapping; and
blend the first image in the updated image set and the second image in the updated image set to form the combined image.

15. The CMS of any one of claims 9 to 14, wherein the processing circuitry is configured to:
display the combined image on an electronic display in the commercial vehicle in a first mode;
display at least one of the first image and the second image separately without combination in a second mode; and
toggle between the first mode and the second mode in response to receipt of a toggle command from an occupant of the commercial vehicle.
